# DEMANDE DE BREVET EUROPEEN

(11) **EP 1 187 290 A1**
(43) Date de publication de la demande: **13.03.2002**
(21) Numéro de dépôt: 01402224.8
(22) Date de dépôt: 27.08.2001
(51) Int. Cl.: H02H 9/06

(54) **Dispositif de protection contre les surtensions**

(30) Priorité: 29.08.2000 FR 0011015
(71) Demandeur: Citel 2 C P, 92130 Issy Les Moulineaux (FR)
(72) Inventeur: Cantagrel, Michel, 78800 Houilles (FR)
(74) Mandataire: Laget, Jean-Loup

(57) **Abrégé**

Dispositif de protection contre les surtensions, applicable en particulier au secteur à basse tension, comprenant, entre les deux lignes (1, 2) du secteur, un éclateur à gaz (3), une varistance (4) et un élément thermofusible (5) chargé d'assurer la déconnexion thermique du dispositif. Il comporte, en parallèle sur la varistance (4), une résistance (7) assurant, après la mise en court-circuit de l'éclateur à gaz (3), l'échauffement de l'élément thermofusible (5) pour déclencher la déconnexion thermique du dispositif.

## Description

L'invention concerne un dispositif de protection contre les surtensions, applicable en particulier au secteur à basse tension.

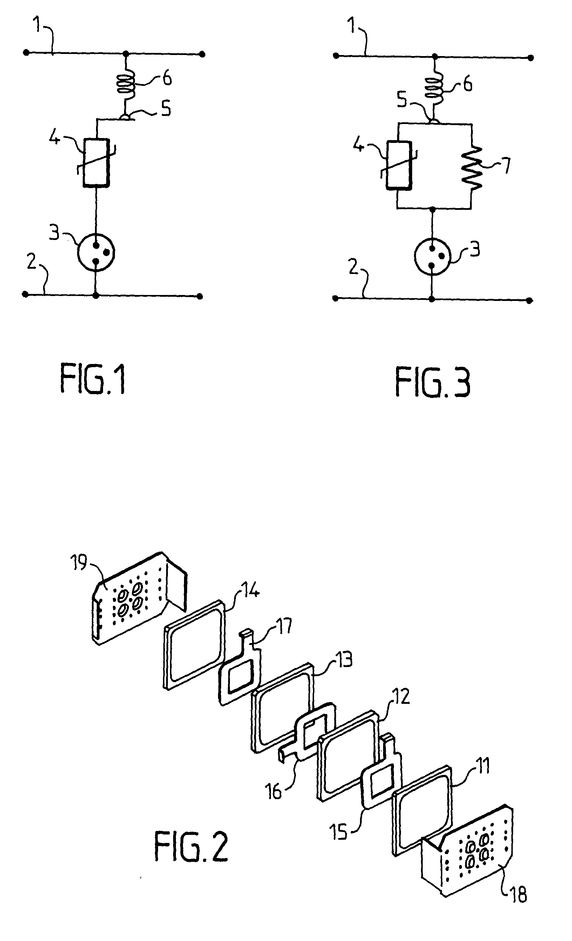

Pour la protection d'un circuit d'utilisation alimenté à partir du secteur à basse tension (inférieure à 400 V par exemple), il est d'usage d'utiliser, entre les deux lignes d'un secteur alternatif à 50 ou 60 Hz, une varistance à oxyde métallique, notamment à oxyde de zinc, montée en série d'une part avec un élément thermofusible de déconnexion, d'autre part avec un éclateur à gaz. La figure 1 représente un schéma représentatif d'un tel dispositif. Entre les lignes 1 et 2 du secteur, dont la partie droite est à protéger contre les surtensions, sont montés en série un éclateur à gaz 3, une varistance 4 et un élément thermofusible 5 soumis à la tension d'un ressort 6 chargé d'assurer la déconnexion effective après fusion de l'élément 5.

Un tel dispositif fonctionne théoriquement de la manière suivante : l'éclateur à gaz 3 supporte pratiquement toute la tension alternative du secteur. En effet, la capacité parasite de l'éclateur 3 est de quelques picofarads alors que la capacité parasite de la varistance 4 est de quelques nanofarads. Lorsque survient une surtension, elle provoque l'amorçage de l'éclateur à gaz 3, qui ne peut s'éteindre que si le courant, dit de suite, qui le traverse ultérieurement devient suffisamment faible. C'est la résistance de la varistance 4 qui assure la limitation du courant de suite et permet l'extinction de l'éclateur à gaz 3.

Lorsqu'un dispositif de protection contre les surtensions a fonctionné un certain nombre de fois, ses composants arrivent en fin de vie. Pour un éclateur à gaz, la fin de vie correspond à une mise en court-circuit. En revanche, pour une varistance, la fin de vie se traduit par une explosion. Par mesure de sécurité, l'éclateur à gaz est conçu pour que son aptitude à écouler les impulsions énergétiques liées aux surtensions soit inférieure à celle de la varistance. De cette manière, c'est l'éclateur à gaz qui arrive le premier en fin de vie et qui se met en court-circuit.

La tension du secteur se trouve alors totalement reportée sur la varistance 4, qui s'échauffe et entraîne la fusion de l'élément thermofusible 5 et la déconnexion thermique, c'est-à-dire la mise hors service du dispositif de protection.

Un tel dispositif fonctionne de manière satisfaisante, mais seulement dans une plage de tensions limitée. En effet, pour que la varistance assure efficacement l'extinction de l'éclateur à gaz, sa tension nominale doit être très proche de celle du secteur. Par ailleurs, si la tension nominale de la varistance est trop élevée, l'échauffement nécessaire pour déclencher la déconnexion thermique ne sera pas atteint et la sécurité de fonctionnement du dispositif ne sera pas assurée.

L'invention a pour but de proposer un dispositif de sécurité contre les surtensions qui puisse fonctionner dans une large plage de tensions, par exemple entre 180 et 330 V, pour pouvoir jouer son rôle dans pratiquement tous les pays du monde.

Un autre but de l'invention est de proposer un dispositif de sécurité contre les surtensions dans lequel la fonction d'extinction de l'éclateur à gaz soit dissociée de la fonction de déconnexion thermique.

L'invention a pour objet un dispositif de protection contre les surtensions, applicable en particulier au secteur à basse tension, comprenant, entre les deux lignes du secteur, un éclateur à gaz, une varistance et un élément thermofusible chargé d'assurer la déconnexion thermique du dispositif, caractérisé en ce qu'il comporte, en parallèle sur la varistance, une résistance assurant, après la mise en court-circuit de l'éclateur à gaz, l'échauffement de l'élément thermofusible pour déclencher la déconnexion thermique du dispositif.

Avantageusement, le dispositif de protection contre les surtensions est applicable au secteur à basse tension dans une large plage de tensions : la varistance est définie pour éteindre l'éclateur à gaz jusqu'à la tension maximale d'utilisation, et la résistance est définie pour déclencher la déconnexion thermique du dispositif à la tension minimale d'utilisation.

D'autres caractéristiques de l'invention ressortent de la description qui suit, faite avec référence au dessin annexé, dans lequel :
- la figure 1 est un schéma représentatif d'un exemple de réalisation d'un dispositif de protection contre les surtensions de type connu ;
- la figure 2 est une vue éclatée d'un mode de réalisation d'un groupe de varistances montées en parallèle ;
- la figure 3 est un schéma représentatif d'un exemple de réalisation d'un dispositif de protection contre les surtensions selon l'invention.

Sur la figure 2 est représenté un assemblage de quatre varistances 11, 12, 13, 14 montées en parallèle, séparées par des électrodes 15, 16, 17 et tenues entre deux flans 18 et 19. Avantageusement, sur l'un des deux flans est monté l'éclateur à gaz, et sur l'autre l'élément thermofusible.

Sur la figure 3, les mêmes éléments que sur la figure 1 portent les mêmes références. Selon l'invention, une résistance 7 est montée en parallèle sur la varistance 4. Cette résistance a une valeur de quelques centaines d'ohms, par exemple 400 ohms.

Dans le cas où la varistance 4 est constituée par un assemblage de plusieurs varistances en parallèle comme sur la figure 2, l'une des varistances (11) peut être remplacée par une résistance 7 de mêmes dimensions. Cette résistance 7 peut être fixe, ou à coefficient de température négatif ou positif. Elle a pour objet de provoquer l'échauffement qui va déclencher la déconnexion thermique par l'intermédiaire de l'élément thermofusible 5, de façon à mettre le dispositif hors service après la fin de vie, c'est-à-dire la mise en court-circuit, de l'éclateur à gaz 3.

Ainsi, dans une plage de tensions de fonctionnement prévue entre 180 et 330 V par exemple, les varistances vont être définies pour éteindre l'éclateur à gaz jusqu'à la tension maximale d'utilisation (330 V), tandis que la résistance va être définie pour pouvoir déclencher la déconnexion thermique à la tension minimale de la plage de fonctionnement (180 V).

La disposition de la résistance 7 en parallèle sur la varistance 4 permet de séparer les deux fonctions : extinction de l'éclateur à gaz, et déclenchement de la déconnexion thermique.

Tout au long de la description, l'expression éclateur à gaz a été utilisée. Cette expression couvre aussi la notion d'éclateur à air, de parasurtenseur ou de parafoudre.

## Revendications

1. Dispositif de protection contre les surtensions, applicable en particulier au secteur à basse tension, comprenant, entre les deux lignes (1, 2) du secteur, un éclateur à gaz (3), une varistance (4) et un élément thermofusible (5) chargé d'assurer la déconnexion thermique du dispositif, **caractérisé en ce qu'**il comporte, en parallèle sur la varistance (4), une résistance (7) assurant, après la mise en court-circuit de l'éclateur à gaz (3), l'échauffement de l'élément thermofusible (5) pour déclencher la déconnexion thermique du dispositif.

2. Dispositif de protection contre les surtensions selon la revendication 1, applicable au secteur à basse tension dans une large plage de tensions, **caractérisé en ce que** la varistance (4) est définie pour éteindre l'éclateur à gaz (3) jusqu'à la tension maximale d'utilisation, et **en ce que** la résistance (7) est définie pour déclencher la déconnexion thermique du dispositif à la tension minimale d'utilisation.
